# EUROPÄISCHE PATENTANMELDUNG

(11) **EP 4 756 239 A1**
(43) Veröffentlichungstag der Anmeldung: **10.06.2026**
(21) Anmeldenummer: 25213853.2
(22) Anmeldetag: 06.11.2025
(51) Int. Cl.: F16B 13/00

(54) **DÜBEL ZUR VERANKERUNG IN PORENBETON**

(30) Priorität: 09.12.2024 DE 102024136614; 11.09.2025 DE 102025136719; 21.10.2025 DE 102025142946
(71) Anmelder: fischerwerke GmbH & Co. KG, 72178 Waldachtal (DE)
(72) Erfinder: Daly, Aaron, 72285 Pfalzgrafenweiler (DE)
(74) Vertreter: Suchy, Ulrich Johannes

(57) **Zusammenfassung**

Die Erfindung betrifft einen Dübel (1) zur Verankerung in Porenbeton, der einen hülsenartigen Hohlschaft (2) aufweist, der sich von einem hinteren Ende (3) zu einem vorderen Ende (4) in Längsrichtung entlang einer Längsachse (5) erstreckt. Der Hohlschaft (2) weist einen sich in Längsrichtung erstreckenden Schraubkanal (6) auf, in den vom hinteren Ende (3) eine Schraube eingeschraubt werden kann, um ein Anbauteil am Dübel (1) zu befestigen. Erfindungsgemäß ist ein in Richtung der Längsachse (5) gemessene Abstand (14) von einem hinteren Ende (3) des Hohlschafts (2) bis zu einem hinteren Ende (13) eines Schlitzes (10), der den Hohlschaft (2) schwächt, kleiner als oder gleich wie der in Richtung der Längsachse (5) gemessene Abstand (16) vom hinteren Ende (3) des Hohlschafts (2) bis zu einem hinteren Ende (15) eines Außengewindes (7), das am Hohlschaft (2) angeordnet ist.

## Beschreibung

Die Erfindung betrifft einen Dübel zur Verankerung in Porenbeton mit den Merkmalen des Oberbegriffs des Anspruchs 1.

Aus dem Europäischen Patent EP 1 055 074 B1 ist ein Dübel bekannt, der zum Befestigen eines Anbauteils an einer Gipskartonplatte verwendet werden kann. Der Dübel umfasst einen geschlitzten hülsenartigen Hohlschaft mit einem Außengewinde. Zudem weist der Dübel eine selbstschneidende Spitze auf, so dass der Dübel ohne Vorbohren in eine Gipskartonplatte eingedreht werden kann. Nach dem Eindrehen wird eine Schraube zur Befestigung des Anbauteils in einen Schraubkanal des Dübels geschraubt, wodurch der Dübel aufspreizt, was den Halt in dem Gipskarton verbessert.

Aus dem Europäischen Patent EP 3 714 171 B1 ist ein gattungsgemäßer Dübel bekannt, der zur Verankerung in mineralischen Baustoffen wie Beton oder Mauerwerk geeignet ist. Der Dübel weist ebenfalls einen hülsenartigen Hohlschaft mit einem Außengewinde auf, aber keine selbstschneidende Spitze. Der Dübel ist im vorderen Bereich des Hohlschafts ebenfalls geschlitzt, so dass dieser Bereich beim Einbringen einer Schraube in einen sich in Längsrichtung des Hohlschafts erstreckenden Schraubkanal aufspreizt. Die Schraube dient aber nicht zur Befestigung des Anbauteils am Dübel, sondern der Dübel übergreift das Anbauteil mit einem über den Hohlschaft überstehenden Bund, der am hinteren Ende des Hohlschafts angeordnet ist.

Nachteilig an den bekannten Dübeln ist, dass sie zum Einsatz in einem Verankerungsgrund aus Porenbeton, der aufgrund seiner Porosität besondere Anforderungen an Dübel stellt, nicht oder nur bedingt geeignet sind. Porenbeton ist durch eine Vielzahl von Poren gekennzeichnet, die in einer Matrix aus Beton verteilt eingebettet sind. Zudem sind Porenbetone unterschiedlicher Druckfestigkeitsklassen handelsüblich. Vereinfacht gesagt: Es gibt Porenbeton von "relativ weich" bis "fest". Die Porosität und Festigkeit hat aber auf das Tragverhalten des Dübels und sein Montageverhalten direkten Einfluss. Grundsätzlich stehen sich die Anforderungen an eine einfache Montage in druckfestem Porenbeton und ein gutes Tragverhalten in Porenbeton geringer Druckfestigkeit diametral gegenüber.

Aufgabe der Erfindung ist es daher, einen Dübel bereitzustellen, der in unterschiedlichen Porenbetonen einfach und sicher verwendet werden kann.

Diese Aufgabe wird erfindungsgemäß durch einen Dübel mit den Merkmalen des Anspruchs 1 gelöst. Der erfindungsgemäße Dübel zur Verankerung in einem Verankerungsgrund aus Porenbeton umfasst einen hülsenartigen Hohlschaft, der sich über seine Länge in Längsrichtung entlang einer Längsachse des Dübels von einem hinteren Ende zu einem vorderen Ende erstreckt. Insbesondere bildet das hintere Ende des Hohlschafts das hintere Ende des Dübels und das vordere Ende des Hohlschafts das vordere Ende des Dübels. Es ist vorgesehen, dass zur Verankerung des Dübels im Verankerungsgrund aus Porenbeton zunächst ein Bohrloch in den Porenbeton gebohrt wird, wobei der Nenndurchmesser des Bohrlochs dem Nenndurchmesser des Dübels entspricht. Nach dem Erstellen des Bohrlochs wird der Dübel in das Bohrloch eingebracht.

Insbesondere ist am hinteren Ende des Hohlschafts ein Bund angeordnet, um zu verhindern, dass der Dübel zu tief in das Bohrloch eingebracht werden kann. Der Bund weist einen Durchmesser auf, der größer als der des hülsenartigen Hohlschafts ist, und ist insbesondere kreisringförmig umlaufend und insbesondere einstückig mit dem Hohlschaft am Hohlschaft angeordnet.

"Durchmesser" meint hier und nachfolgend den Durchmesser eines Umkreises, der den Querschnitt des Dübels beziehungsweise eines genannten Teils des Dübels in einer Radialebene zur Längsachse umschreibt. Bei einem Kreisquerschnitt entspricht der Durchmesser des Umkreises dem des Kreisquerschnitts.

In seinem Innern weist der Hohlschaft einen sich in Längsrichtung erstreckenden Schraubkanal auf, der zumindest hinten offen ist, so dass vom hinteren Ende des Hohlschafts aus eine Schraube zum Befestigen eines Anbauteils am Dübel in den Schraubkanal eingeschraubt werden kann.

Der Hohlschaft bildet zudem einen Kern für ein Außengewinde des Dübels. Der Kerndurchmesser ist bei diesem Dübel im Verhältnis zum Durchmesser des Außengewindes relativ groß. Er beträgt mindestens 60 Prozent, insbesondere mindestens 70 Prozent und vorzugsweise mindestens 75 Prozent des Durchmessers des Außengewindes. Das Außengewinde ist am Hohlschaft angeordnet und insbesondere einstückig mit dem Hohlschaft verbunden. Es erstreckt sich in Längsrichtung über eine erste Teillänge des Hohlschafts. Das Außengewinde ist derart gestaltet, dass es selbstständig ein komplementäres Gewinde auch in einem druckfesten Porenbeton in eine Wand des Bohrlochs einschneiden kann, wenn der Dübel drehend in das Bohrloch eingebracht wird. Das Außengewinde weist hierfür insbesondere die Form eines Trapezes auf, das insbesondere gleichschenklig ist. Die am Hohlschaft angeordnete Grundseite dieses Trapezes ist insbesondere dreimal bis sechsmal so lang, wie seine parallel verlaufende Außenseite, was auch im harten Porenbeton ein gutes Einschneiden ermöglicht. Zudem können radial außen am Außengewinde Kerben als Schneidelemente angeordnet sein, die das Einschneiden zusätzlich verbessern.

Um ein Eindrehen zu ermöglichen, kann am hinteren Ende des Dübels eine Werkzeugaufnahme zur Aufnahme eines Drehwerkzeugs angeordnet sein, beispielsweise in Form eines Kreuzschlitzes oder eines Innenmehrkants.

Zudem weist der Hohlschaft einen, insbesondere genau einen, geschlitzten Bereich auf, mit mindestens einem in Richtung der Längsachse verlaufenden Schlitz. Der Schlitz erstreckt sich über eine zweite Teillänge des Hohlschafts und schwächt eine Wand des Hohlschafts derart, dass der Hohlschaft im Bereich des Schlitzes elastisch verformbar, beispielsweise beim Einbringen des Dübels in das Bohrloch zusammendrückbar und/oder durch das Einbringen einer Schraube in den Schraubkanal aufspreizbar ist. Der Schlitz definiert somit auch die Länge eines Spreizbereichs des Dübels. Es können auch mehrere Schlitze vorgesehen sein, die sich insbesondere alle wie beansprucht erstrecken, insbesondere alle gleich weit über die zweite Teillänge erstrecken. Jeder Schlitz erstreckt sich von der Längsachse nach außen und parallel zur Längsachse. Dass "ein Schlitz die Wand schwächt" meint hier, dass der Schlitz zu mindestens 80 Prozent der Wanddicke in die Wand eindringt, insbesondere zu mindestens 90 Prozent der Wanddicke. Insbesondere durchdringt der mindestens eine Schlitz die Wand des Hohlschafts in radialer Richtung vollständig, insbesondere zudem das Außengewinde. Der Schlitz kann in Längsrichtung gerade und parallel zur Längsachse verlaufen, er kann aber auch von einer Geraden abweichen, beispielsweise zumindest in Teilbereichen auch gekrümmt oder abgewinkelt sein. Insbesondere definiert die Anzahl der Schlitze die Anzahl von aufspreizbaren Spreizelementen des Dübels: Beispielsweise bildet bei einem Schlitz der einfach geschlitzte Hohlschaft ein Spreizelement, das insbesondere beim Einbringen einer zum Aufspreizen verwendbaren Schraube in den Bereich des Spreizelements aufspreizen, sich also im Durchmesser weiten kann. Durch zwei Schlitze werden zwei Spreizelemente ausgebildet, wobei beide Schlitze sich von der Längsachse weg erstrecken, beispielsweise in einer Radialebene, aber in entgegengesetzten Richtungen.

Erfindungsgemäß ist der parallel zur Längsachse gemessene Abstand vom hinteren Ende des Hohlschafts bis zu einem hinteren Ende des Schlitzes kleiner als oder gleich wie der parallel zur Längsachse gemessene Abstand vom hinteren Ende des Hohlschafts bis zu einem hinteren Ende des Außengewindes. Insbesondere ist der Abstand vom hinteren Ende des Hohlschafts bis zum hinteren Ende des Schlitzes kleiner als der parallel zur Längsachse gemessene Abstand vom hinteren Ende des Hohlschafts bis zum hinteren Ende des Außengewindes. "Kleiner" meint insbesondere mindestens zehn Prozent des Durchmessers des Hohlschafts in dem Querschnitt, in dem das hintere Ende des Außengewindes liegt.

Dabei ist der Abstand des hinteren Endes des Schlitzes vom hinteren Ende des Hohlschafts ungleich Null, das heißt, der Hohlschaft ist hinten als in Umfangsrichtung geschlossene Hülse ausgebildet, wodurch die für das Eindrehen des Dübels in das Bohrloch notwendige Stabilität gewährleistet ist.

Der erfindungsgemäße Dübel zeichnet sich durch eine verbesserte Federwirkung in radialer Richtung aus. Dies hat den Vorteil, dass dadurch der Eindrehwiderstand des Dübels beim Eindrehen in ein Bohrloch in einem harten Porenbeton hoher Druckfestigkeit verringert ist. In einen harte Porenbeton lässt sich der Dübel leicht einschrauben, da er über einen großen Bereich und insbesondere im Bereich des Außengewindes radial nach innen nachgeben kann. Das Außengewinde schneidet aber trotzdem so tief in die Bohrlochwand ein, dass es im harten Porenbeton ausreichend verankert ist. Es wurde erkannt, dass in einem harten Porenbeton das Außengewinde hierfür nicht über seine gesamte Länge vollständig über seine gesamte Flankenhöhe in die Bohrlochwand einschneiden muss. Auch ein zusätzliches Aufspreizen des Dübels bei Einbringen der Schraube zum Befestigen des Anbauteils ist nicht zwingend notwendig. In diesem Fall kann der Teil der Schraube, der in den Dübel eingreift, daher kürzer sein, als der Dübel lang ist. Aufgrund der Federwirkung ist der Dübel aber konstruktionsbedingt auch leicht aufspreizbar. In einem weichen Porenbeton bewirkt die gute Spreizbarkeit, dass zusätzlich zum Eingriff des Außengewindes ein zusätzlicher Halt durch ein weites Aufspreizen des Dübels erreichbar ist, wenn die Schraube so lang ist, dass sie den Dübel über einen Großteil, insbesondere über seine ganze Länge durchdringt.

Bei einer bevorzugten Ausgestaltungsform ist der parallel zur Längsachse gemessene Abstand vom vorderen Ende des Hohlschafts bis zu einem vorderen Ende des Schlitzes kleiner als oder gleich wie der parallel zur Längsachse gemessene Abstand vom vorderen Ende des Hohlschafts bis zu einem vorderen Ende des Außengewindes, wodurch das Aufspreizverhalten und somit die Verankerung in weichem Porenbetonen weiter verbessert ist. Insbesondere ist der Abstand vom vorderen Ende des Hohlschafts bis zu einem vorderen Ende des Schlitzes kleiner als der in Richtung der Längsachse gemessene Abstand vom vorderen Ende des Hohlschafts bis zu einem vorderen Ende des Außengewindes.

Vorzugsweise weist der Dübel in einer vorderen Teillänge des Hohlschafts kein Außengewinde auf. Die vordere Teillänge schließt sich nach vorne an die erste Teillänge an, über die sich das Außengewinde erstreckt. Insbesondere entspricht der Abstand vom vorderen Ende des Außengewindes zum vorderen Ende des Hohlschafts mindestens dem einfachen, insbesondere mindestens dem 1,5-fachen des Durchmessers des Hohlschafts in dem Querschnitt, in dem das vordere Ende des Außengewindes liegt. Insbesondere weist ein vorderes Viertel, insbesondere ein vorderes Drittel des Dübels kein Außengewinde auf.

Insbesondere ist der Schlitz in Richtung der Längsachse gemessen länger als das Außengewinde des Dübels, das heißt, die erste Teillänge ist kleiner als die zweite Teillänge.

Vorzugsweise erstreckt sich der Schlitz bis zum vorderen Ende des Hohlschafts, das insbesondere das vordere Ende des Dübels bildet. Das heißt, der Schlitz durchtrennt das vordere Ende vollständig, so dass ein Aufspreizen des Dübels nicht behindert ist. Der Dübel kann daher mit einer Schraube weit aufgespreizt werden, so dass auch in einem weichen Porenbeton ein guter Halt des Dübels erreicht werden kann.

In einer bevorzugten Ausgestaltungsform des erfindungsgemäßen Dübels weist der Hohlschaft auf seiner Außenseite hinten konische oder keilartige Flächen auf, die einen konischen Abschnitt bilden. Das heißt, dass in diesem Bereich die Mantelfläche von der Zylinderform des Kerns des Gewindes abweicht. Insbesondere vergrößert sich der Durchmesser des Hohlschafts in diesem Abschnitt zu seinem hinteren Ende hin konisch. Der konische Abschnitt erstreckt sich insbesondere über mindestens 50 Prozent, insbesondere über mindestens 75 Prozent des Abstands zwischen dem hinteren Ende des Außengewindes und hinterem Ende des Dübels. Durch diese Ausgestaltung wird der Sitz des Dübels im Bohrloch verbessert, da eine Anlage des Dübels über seinen Umfang am Bohrlochmund verbessert ist. Vorzugsweise endet das Außengewinde bei dieser Ausgestaltungsform vor dem konischen Abschnitt. Unabhängig davon kann sich der Schlitz bis in den konischen Abschnitt hinein erstrecken.

Dagegen ist der Hohlschaft als Kern für das Außengewinde und somit im Bereich des Außengewindes vorzugsweise zylindrisch, das heißt er weist als Kern eine über seine Länge zylindrische Mantelfläche mit konstantem Durchmesser auf.

Weiterhin ist eine Ausgestaltungsform bevorzugt, bei der in einem hinteren Abschnitt des Schraubkanals von der Wand des Hohlschafts nach innen hin gerichtete Rippen angeordnet sind, die den Schraubkanal verengen, so dass eine Schraube zum Befestigen im Schraubkanal in sie einschneiden kann. Insbesondere sind die hinteren Enden der Rippen vom hinteren Ende des Hohlschafts beabstandet. Insbesondere ist der Abstand der hinteren Enden der Rippen vom hinteren Ende des Hohlschafts mindestens so groß, wie der Durchmesser des Schraubkanals am hinteren Ende der Rippen. Insbesondere gehen die Rippen von ihrem hinteren Ende über eine schräge oder gekrümmte Übergangsfläche oder sprungartig in eine Nut der Werkzeugaufnahme über. Vorzugsweise weist bei dieser bevorzugten Ausgestaltungsform das hintere Ende mindestens einer der Rippen einen größeren Abstand zum hinteren Ende des Hohlschafts auf als der Schlitz. Alternativ oder zusätzlich erstreckt sich mindestens eine der Rippen im Wesentlichen über die gesamte Länge des Außengewindes, insbesondere über das vordere Ende des Außengewindes hinaus. Insbesondere gilt dies für alle Rippen beziehungsweise Schlitze des Dübels. Dadurch ist gewährleistet, dass die Schraube mit einem anfänglich sehr geringen Drehwiderstand in den Schraubkanal eingeführt werden kann. Die Schraube trifft erst im Bereich des Außengewindes auf die Rippen. In diesem Bereich ist der Dübel geschlitzt, so dass er zumindest leicht aufgespreizt, das heißt aufgeweitet werden kann, so dass das Außengewinde in der Bohrlochwand festgelegt ist. Durch das Aufweiten erhöht sich der Anpressdruck des Dübels gegen die Bohrlochwand, wodurch ein Mitdrehen des Dübels im Bohrloch beim weiteren Einschrauben der Schraube in den Schraubkanal auch bei weichen Porenbetonen sicher verhindert wird.

Weiterhin ist bevorzugt, dass der Schraubkanal in einem vorderen Abschnitt, der vor dem Außengewinde angeordnet ist, einen kleineren Durchmesser aufweist als im Bereich des Außengewindes. Insbesondere ist der Durchmesser des Schraubkanals in dem vorderen Abschnitt auch dann kleiner als im hinteren Abschnitt, wenn im hinteren Abschnitt Rippen angeordnet sind, wie dies im vorhergehenden Abschnitt beschrieben ist. Gelangt die Schraube in den vorderen Abschnitt des Schraubkanals, so wird der Dübel in diesem Bereich stärker gespreizt als im Bereich des Außengewindes. In weichem Porenbeton bildet dieser vordere Bereich nach dem Aufspreizen einen Hinterschnitt, wodurch sich die Haltekraft des Dübels im weichem Porenbeton erhöht. Bei der Bildung des Hinterschnitts wird beim Aufspreizen die Porenstruktur des weichen Porenbetons lokal zerstört.

Vorzugsweise sind auf der Außenseite des Hohlschafts vor dem Außengewinde nutartige Vertiefungen angeordnet, die Keilflächen mit unterschiedlichen Steigungen bilden, wobei hintereinander angeordnete Keilflächen insbesondere symmetrisch zu einer Axialebene, zu der die Längsachse eine Normale bildet, angeordnet sind. Insbesondere sind mehrere Vertiefungen in Längsrichtung hintereinander angeordnet, insbesondere symmetrisch zu einer Radialebene, die eine Symmetrieebene für die Vertiefungen bildet. Insbesondere ist die in Einbringrichtung des Dübels vorderste Keilfläche steiler als die nachfolgende Keilfläche, sie schließt mit der Längsachse somit einen größeren Winkel ein. Insbesondere weist ein den Dübel im Bereich der nutartigen Vertiefungen umschreibender Umkreis einen Durchmesser auf, der dem Durchmesser des Hohlschafts im Bereich des Außengewindes entspricht. Durch die Keilflächen wird der Halt des Dübels im Bohrloch weiter verbessert, insbesondere dann, wenn sich nach einem Aufspreizen des vorderen gewindelosen Bereichs ein Hinterschnitt im Verankerungsgrund gebildet hat.

Der erfindungsgemäße Dübel ist insbesondere aus Kunststoff hergestellt mittels eines Spritzgussverfahrens, insbesondere aus einem verstärkten Kunststoff. Hierdurch ist der Dübel kostengünstig als Massenprodukt in gleichbleibend hoher Qualität herstellbar.

Die Erfindung wird nachfolgend anhand eines in der Zeichnung dargestellten Ausführungsbeispiels näher erläutert.

Es zeigen:

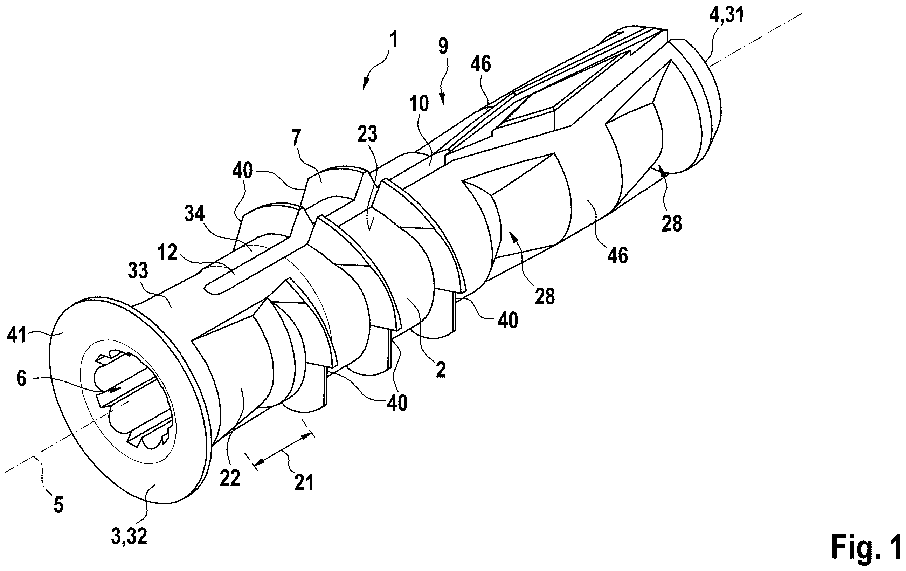

- Figur 1: einen erfindungsgemäßen Dübel in einer perspektivischen Ansicht von hinten;
- Figur 2: den erfindungsgemäßen Dübel in einer perspektivischen Ansicht von vorne;
- Figur 3: den erfindungsgemäßen Dübel in einer Seitenansicht;
- Figur 4: einen Axialschnitt des Dübels aus Figur 4; und

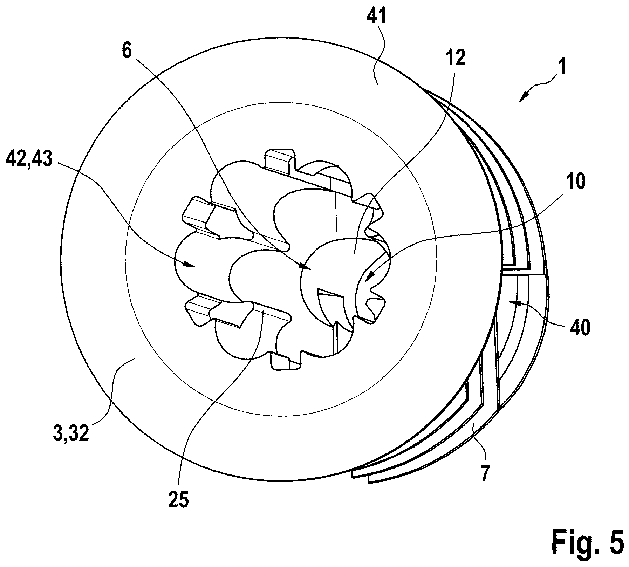

- Figur 5: eine vergrößerte perspektivische Ansicht des hinteren Endes des Dübels.

**In** den Figuren ist ein erfindungsgemäßer Dübel 1 dargestellt, der zur Verankerung in einem Verankerungsgrund (nicht dargestellt) aus Porenbeton bestimmt ist. Der Dübel 1 wird zur Verankerung im Verankerungsgrund planmäßig mit seinem vorderen Ende 31 voran in ein Bohrloch (nicht dargestellt) in den Verankerungsgrund eingebracht und nachfolgend eine Schraube (nicht dargestellt) in den Dübel 1 eingeschraubt, mit der ein Anbauteil (nicht dargestellt) am Dübel 1 und somit am Verankerungsgrund befestigt wird. Der dargestellte Dübel 1 ist zur sicheren Verankerung und einfachen Montage in Porenbetonen unterschiedlichster Festigkeit ausgelegt und geeignet.

Der erfindungsgemäße Dübel 1 weist einen hülsenartigen Hohlschaft 2 auf, der sich von seinem hinteren Ende 3 zu seinem vorderen Ende 4 in Längsrichtung entlang einer Längsachse 5 erstreckt, die auch die Längsachse 5 des Dübels 1 bildet. Das hintere Ende 3 des Hohlschafts 2 bildet das hintere Ende 32 des Dübels 1. Das vordere Ende 4 des Hohlschafts 2 bildet das vordere Ende 31 des Dübels 1. Der Hohlschaft 2 weist einen Schraubkanal 6 auf, der sich entlang der Längsachse 5 erstreckt. Die Längsachse 5 bildet das Zentrum des Hohlschafts 2 und des Schraubkanals 6, die sich konzentrisch zueinander und entlang der Längsachse 5 erstrecken.

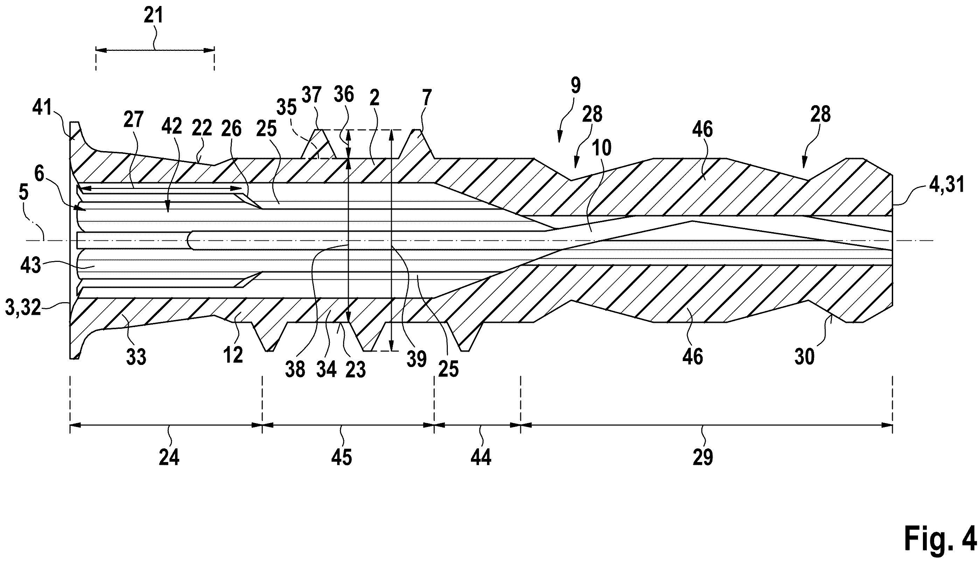

Zudem erstreckt sich konzentrisch zum und um den Hohlschaft 2 ein Außengewinde 7, mit dem der Dübel 1 in das Bohrloch eingedreht und im Bohrloch befestigt werden kann. Der Hohlschaft 2 weist als Kern 34 für das Außengewinde 7 des Dübels 1 eine zylindrische Mantelfläche 23 auf. Auf dieser Mantelfläche 23 ist das Außengewinde 7 am Hohlschaft 2 angeordnet und einstückig mit dem Hohlschaft 2 verbunden. Das Außengewinde 7 erstreckt sich nur über eine erste Teillänge 11 des Hohlschafts 2 und ist vom hinteren Ende 3 des Hohlschafts 2 sowie vom vorderen Ende 4 des Hohlschafts 2 beabstandet. Das Außengewinde 7 ist derart gestaltet, dass es sich in Porenbetonen verschiedenster Druckfestigkeiten sicher eindrehen lässt und es dabei ein korrespondierendes Innengewinde in die Bohrlochwand schneidet. Das Außengewinde 7 weist eine trapezförmige Gewindeflanke mit breiter Basis, der in Figur 4 zu sehende Grundseite 35, und mit einer im Verhältnis hierzu und im Verhältnis zum Kern 34 geringen Flankenhöhe 36 ausgebildet. Wie in Figur 4 zu sehen, bildet das Außengewinde 7 im Querschnitt ein gleichschenkliges Trapez, dessen Grundseite 35, das mit dem Hohlschaft 2 verbunden ist, fünfmal größer ist als die parallel verlaufende Außenseite 37. Der Kern 34 weist einen Kerndurchmesser 38 auf, der achtzig Prozent des Außendurchmessers 39 des Außengewindes 7 entspricht. Diese Gewindegeometrie gewährleistet, dass das Außengewinde 7 auch in Porenbetonen großer Druckfestigkeit leicht und sicher eingeschraubt werden kann und trotzdem in derartigen Porenbetonen große Haltekräfte über das vom Außengewinde 7 in die Bohrlochwand eingeschnittene Innengewinde in den Verankerungsgrund einleiten kann. Zudem sind an der Außenseite 37 des Außengewindes 7 mehrere Kerben 40 in zwei Reihen hintereinanderliegend angeordnet. Die Kerben 40 erleichtern ein Einschneiden des Außengewindes 7 in die Bohrlochwand.

Der Hohlschaft 2 weist hinten eine im Umfang geschlossene formstabile Hülse 33 auf. Das hintere Ende 32 ist das dem vorderen Ende 31 gegenüberliegende Ende des Dübels 1, wobei das vordere Ende 31 das Ende des Dübels 1 ist, mit dem voran der Dübel 1 planmäßig in ein Bohrloch eingebracht wird. An die Hülse 33 schließt sich hinten ein Bund 41 einstückig an, der sich in Umfangsrichtung um den Hohlschaft 2 erstreckt und über den Hohlschaft 2, der eine im Wesentlichen zylindrische Außenform mit dem Kerndurchmesser 38 aufweist, radial zur Längsachse 5 über den Hohlschaft 2 übersteht. Beim Eindrehen in das Bohrloch verhindert der Bund 41, dass der Dübel 1 zu tief in das Bohrloch eingedreht werden kann. Im Innern der Hülse 33 ist in einem hinteren Teil 42 des Schraubkanals 6 eine Werkzeugaufnahme 43 ausgebildet, hier in Form eines TX-Innenmehrkants, zur Aufnahme eines Drehwerkzeugs (nicht dargestellt) zum Eindrehen des Dübels 1 in das Bohrloch.

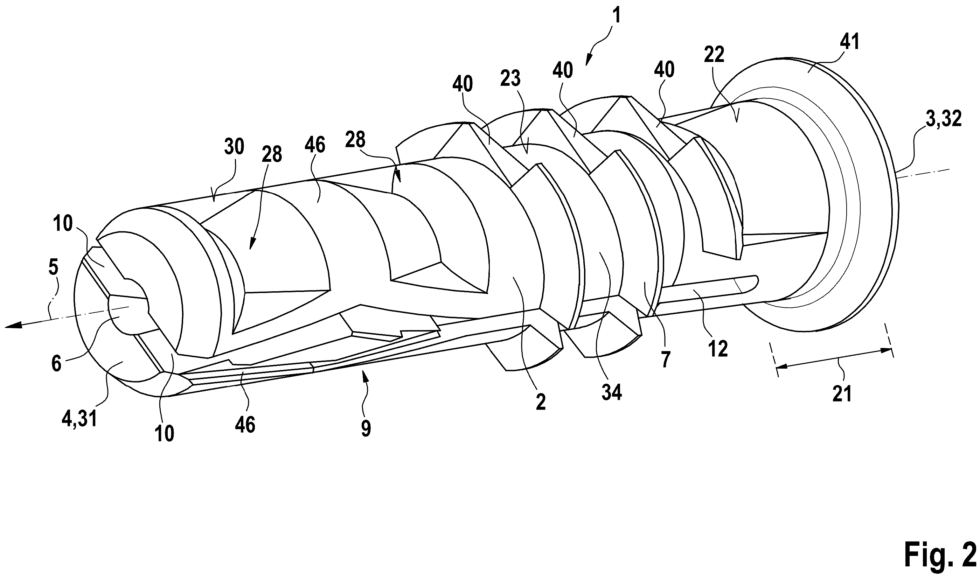

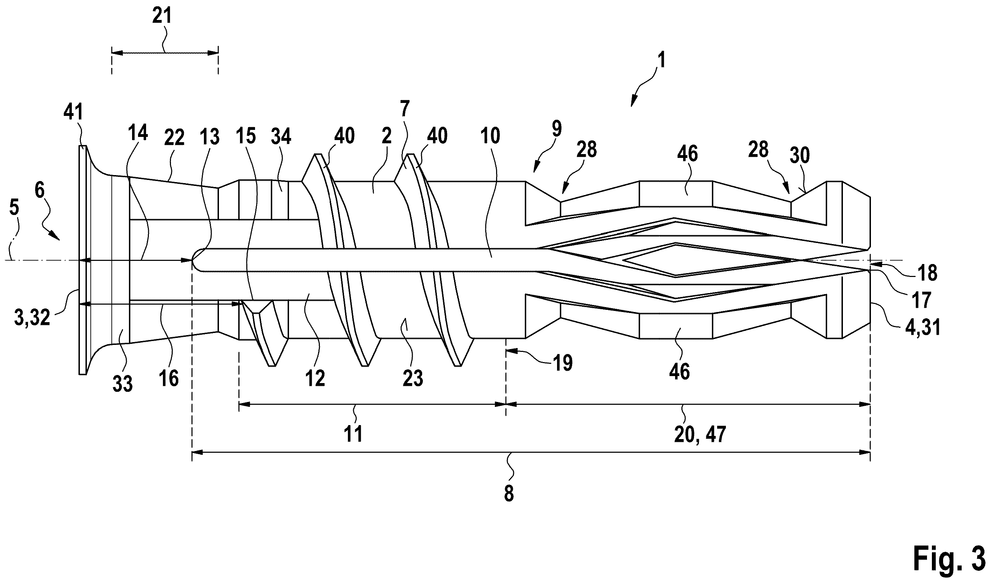

Vor der Hülse 33 weist der Hohlschaft 2 einen geschlitzten Bereich 9 auf, der sich im Ausführungsbeispiel von der geschlossenen Hülse 33 bis zum vorderen Ende 4 des Hohlschafts 2 erstreckt. In diesem Bereich sind zwei Schlitze 10 angeordnet (vgl. Figur 2), die jeweils von der Längsachse 5 nach außen und über eine zweite Teillänge 8 des Hohlschafts 2 parallel zur Längsachse 5 verlaufen und eine Wand 12 des Hohlschafts 2 sowie das Außengewinde 7 jeweils vollständig durchdringen. Die Schlitze 10 beginnen beide mit ihren hinteren Enden 13 im selben Querschnitt des Hohlschafts 2 und erstrecken sich beide bis zum vorderen Ende 4 des Hohlschafts 2. Sie sind somit gleich lang. Im Bereich des Außengewindes 7 verlaufen beide Schlitze 10 gerade, während sie in einem vorderen, gewindelosen Abschnitt des Hohlschafts 2 jeweils in entgegengesetzte Richtungen V-förmig abgewinkelt sind. In einer Seitenansicht (Figur 3) sind die Schlitze 10 rautenförmig, wobei jeweils nur ein "Ast" der Raute den Hohlschaft 2 durchringt, während der andere Ast nutartig ist. Der nutartige Ast des einen Schlitzes 10 deckt sich in der Seitenansicht der Figur 3 mit dem durchdringenden Ast des anderen Schlitzes 10, der in der Zeichnungsebene hinter dem in Figur 3 sichtbaren Schlitz 10 liegt. Dabei ist der parallel zur Längsachse 5 gemessene Abstand 14 vom hinteren Ende 3 des Hohlschafts 2 bis zu einem hinteren Ende 13 der Schlitze 10 kleiner als der parallel zur Längsachse 5 gemessene Abstand 16 vom hinteren Ende 3 des Hohlschafts 2 bis zu einem hinteren Ende 15 des Außengewindes 7. Zudem ist der parallel zur Längsachse 5 gemessene Abstand 18 vom vorderen Ende 4 des Hohlschafts 2 bis zu einem vorderen Ende 17 des Schlitzes 10 vorliegend gleich Null, da die Schlitze 10 das vordere Ende 4 des Hohlschafts 2 ebenfalls vollständig durchdringen. Dieser Abstand 18, der der vorderen Teillänge 47 entspricht, ist somit kleiner als der in Richtung der Längsachse 5 gemessene Abstand 20 vom vorderen Ende 4 des Hohlschafts 2 bis zu einem vorderen Ende 19 des Außengewindes 7, das sich nur über einen Teil der hinteren Hälfte des Hohlschafts 2 erstreckt.

Im Bereich der Hülse 33 weist der Hohlschaft 2 einen konischen Abschnitt 21 mit konischen bzw. keilartigen Flächen 22 auf. Dieser konische Abschnitt 21 beginnt vor dem Bund 41 im Bereich der Hülse 33 und erstreckt sich nach vorne über die Hülse 33 hinaus bis in den geschlitzten Bereich 9. Die konischen bzw. keilartigen Flächen 22 verbessern den Halt des Dübels 1 im Bohrloch. Während sich die Schlitze 10 in den konischen Abschnitt 21 hinein erstrecken, endet das Außengewinde 7 vor diesem konischen Abschnitt 21.

Der Schraubkanal 6 ist derart gestaltet, dass er vom hinteren Ende 3 des Hohlschafts 2 bis zum vorderen Ende 4 des Hohlschafts 2 verläuft. Sein Durchmesser ist am hinteren Ende 3 des Hohlschafts 2 am größten, so dass von dort eine Schraube (nicht dargestellt) in den Schraubkanal 6 eingebracht oder eingeschraubt werden kann. Wie in Figur 4 zu sehen ist, erstreckt sich der Schraubkanal 6 von hinten nach vorne über den gesamten Dübel 1 bzw. über den gesamten Hohlschaft 2. Im Bereich der Hülse 33 und des konischen Abschnitts 21 weist der Schraubkanal 6 seinen größten Durchmesser auf. Hier ist die Werkzeugaufnahme 43 angeordnet, die den Querschnitt des Schraubkanals 6 in diesem Bereich definiert. In diesem hinteren Abschnitt 24 des Schraubkanals 6 kann eine Schraube, die zum Anbringen eines Anbauteils am Dübel 1 und zum Aufspreizen des vorderen, gewindelosen Teils des Dübels 1 geeignet ist, ohne oder mit nur geringem Widerstand eingesteckt oder eingedreht werden. An diesen hinteren Abschnitt 24 des Schraubkanals 6 schließt sich nach vorn im Bereich des Außengewindes 7 ein mittlerer Abschnitt 45 des Schraubkanals 6 an, in dem von der Wand 12 des Hohlschafts 2 nach innen gerichtete Rippen 25 angeordnet sind. Diese Rippen 25 weisen einen Abstand 27 von ihren hinteren Enden 26 zum hinteren Ende 3 des Hohlschafts 2 auf und verengen den Schraubkanal 6, so dass eine Schraube zum Befestigen im Schraubkanal 6 in die Rippen 25 einschneiden kann, ohne dass der Hohlschaft 2 hierbei weit aufspreizt, was bei druckfesten Porenbetonen das Einbringen der Schraube in den Dübel 1 erleichtert. Im Übergangsbereich 44, der zwischen dem Außengewinde 7 und einem vorderen, geschlitzten außengewindelosen Teil des Hohlschafts 2 angeordnet ist, geht der mittlere Abschnitt 45 des Schraubkanals 6 in den vorderen Abschnitt 29 des Schraubkanals 6 über, dessen Durchmesser gegenüber dem hinteren Abschnitt 24 des Schraubkanals 6 um mehr als die Hälfte reduziert ist. In diesem vorderen Abschnitt 29 des Schraubkanals 6 wird eine Schraube, die in diesen vorderen Abschnitt 29 eingedreht wird, und die einen Außendurchmesser aufweist, mit dem sie in die Rippen 25 des mittleren Abschnitts 45 einschneiden kann, den vorderen, gewindelosen Teil des Dübels 1 aufspreizen, so dass die durch die beiden Schlitze 10 ausgebildeten Spreizelemente 46 nach außen gegen die Bohrlochwand und bei weichen Porenbetonen in die Bohrlochwand hineingedrückt werden, so dass sich nicht dargestellte Hinterschneidungen in der Bohrlochwand bilden und der Halt des Dübels 1 in weichen Porenbetonen gewährleistet ist.

Auf der Außenseite der Spreizelemente 46 sind vor dem Außengewinde 7 nutartige Vertiefungen 28 angeordnet. Diese nutartigen Vertiefungen 28 bilden Keilflächen 30 mit unterschiedlichen Steigungen. Dabei ist, wie in Figur 4 zu sehen, eine erste Keilfläche 30 nach vorn geneigt, um ein Einführen des Dübels 1 in ein Bohrloch zu erleichtern. Eine nachfolgende zweite Keilfläche 30 ist dagegen nach hinten geneigt, um den Halt im Porenbeton zu verbessern.

Durch die erfindungsgemäße Ausgestaltung besitzt der Dübel 1 eine Federwirkung, durch die er beim Einführen bzw. beim Eindrehen in ein Bohrloch radial zusammengedrückt werden kann, was ein Einführen bzw. ein Eindrehen in ein Bohrloch in einem Porenbeton hoher Druckfestigkeit erleichtert. Durch die sich weit nach hinten erstreckenden Schlitze 10 ist zudem gewährleistet, dass der Dübel 1 in weniger druckfesten, weicheren Porenbetonen durch anschließendes Einbringen einer Schraube weit aufspreizen kann, und auch in diesen Baustoffen einen guten Halt findet. Da der Dübel 1 einstückig im Spritzgussverfahren herstellbar ist, kann der Dübel kostengünstig als Massenprodukt produziert werden.

### Bezugszeichenliste

Dübel zur Verankerung in Porenbeton
- 1: Dübel
- 2: Hohlschaft
- 3: hinteres Ende des Hohlschafts 2
- 4: vorderes Ende des Hohlschafts 2
- 5: Längsachse
- 6: Schraubkanal
- 7: Außengewinde
- 8: zweite Teillänge des Hohlschafts 2
- 9: geschlitzter Bereich des Hohlschafts 2
- 10: Schlitz
- 11: erste Teillänge des Hohlschafts 2
- 12: Wand
- 13: hinteres Ende des Schlitzes 10
- 14: Abstand vom hinteren Ende 3 des Hohlschafts 2 bis zum hinteren Ende 13 des Schlitzes 10
- 15: hinteres Ende des Außengewindes 7
- 16: Abstand vom hinteren Ende 3 des Hohlschafts 2 bis zum hinteren Ende 15 des Außengewindes 7
- 17: vorderes Ende des Schlitzes 10
- 18: Abstand vom vorderen Ende 4 des Hohlschafts 2 bis zum vorderen Ende 17 des Schlitzes 10
- 19: vorderes Ende des Außengewindes 7
- 20: Abstand vom vorderen Ende 4 des Hohlschafts 2 bis zum vorderen Ende 19 des Außengewindes 7
- 21: konischer Abschnitt
- 22: konische oder keilartige Fläche
- 23: Mantelfläche
- 24: hinterer Abschnitt des Schraubkanals 6
- 25: Rippe
- 26: hintere Ende der Rippe 25
- 27: Abstand vom hinteren Ende 26 der Rippe 25 zum hinteren Ende 3 des Hohlschafts 2
- 28: nutartige Vertiefung
- 29: vorderer Abschnitt des Schraubkanals 6
- 30: Keilfläche
- 31: vorderes Ende des Dübels 1
- 32: hinteres Ende des Dübels 1
- 33: Hülse
- 34: Kern
- 35: Grundseite
- 36: Flankenhöhe
- 37: Außenseite
- 38: Kerndurchmesser
- 39: Außendurchmesser des Außengewindes 7
- 40: Kerben
- 41: Bund
- 42: hinterer Teil des Schraubkanals 6
- 43: Werkzeugaufnahme
- 44: Übergangsbereich
- 45: mittlerer Abschnitt des Schraubkanals 6
- 46: Spreizelemente
- 47: vordere, gewindelose Teillänge

## Patentansprüche

1. Dübel (1) zur Verankerung in Porenbeton,
der einen hülsenartigen Hohlschaft (2) aufweist, der sich von einem hinteren Ende (3) zu einem vorderen Ende (4) in Längsrichtung entlang einer Längsachse (5) erstreckt,
wobei der Hohlschaft (2) einen sich in Längsrichtung, erstreckenden Schraubkanal (6) aufweist, in den vom hinteren Ende (3) eine Schraube eingeschraubt werden kann, um ein Anbauteil am Dübel (1) zu befestigen,
wobei der Hohlschaft (2) einen Kern für ein Außengewinde (7) des Dübels (1) bildet, das am Hohlschaft (2) angeordnet ist,
wobei der Hohlschaft (2) einen geschlitzten Bereich (9) mit mindestens einem in Richtung der Längsachse (5) verlaufenden Schlitz (10) aufweist, der eine Wand des Hohlschafts (2) schwächt, insbesondere durchdringt,
**dadurch gekennzeichnet,**
**dass** der parallel zur Längsachse (5) gemessene Abstand (14) vom hinteren Ende (3) des Hohlschafts (2) bis zu einem hinteren Ende (13) des Schlitzes (10) kleiner ist als oder gleich ist wie der parallel zur Längsachse (5) gemessene Abstand (16) vom hinteren Ende (3) des Hohlschafts (2) bis zu einem hinteren Ende (15) des Außengewindes (7).

2. Dübel (1) nach Anspruch 1, **dadurch gekennzeichnet, dass** der parallel zur Längsachse (5) gemessene Abstand (18) vom vorderen Ende (4) des Hohlschafts (2) bis zu einem vorderen Ende (17) des Schlitzes (10) kleiner als oder gleich ist wie der parallel zur Längsachse (5) gemessene Abstand (20) vom vorderen Ende (4) des Hohlschafts (2) bis zu einem vorderen Ende (19) des Außengewindes (7).

3. Dübel (1) nach einem der vorstehenden Ansprüche, **dadurch gekennzeichnet, dass** sich der Schlitz (10) bis zum vorderen Ende (4) des Hohlschafts (2) erstreckt.

4. Dübel (1) nach einem der vorstehenden Ansprüche, **dadurch gekennzeichnet, dass** der Dübel (1) in einer vorderen Teillänge (47) des Hohlschafts (2) kein Außengewinde (7) aufweist.

5. Dübel (1) nach einem der vorstehenden Ansprüche, **dadurch gekennzeichnet, dass** der Hohlschaft (2) auf seiner Außenseite hinten einen konischen Abschnitt (21) mit konischen oder keilartigen Flächen (22) aufweist.

6. Dübel (1) nach Anspruch 5, **dadurch gekennzeichnet, dass** das Außengewinde (7) vor dem konischen Abschnitt (21) endet und/oder dass der Schlitz (10) sich in den konischen Abschnitt (21) erstreckt.

7. Dübel (1) nach einem der vorstehenden Ansprüche **dadurch gekennzeichnet, dass** der Hohlschaft (2) als Kern für das Außengewinde (7) eine zylindrische Mantelfläche (23) aufweist.

8. Dübel (1) nach einem der vorstehenden Ansprüche, **dadurch gekennzeichnet, dass** in einem mittleren Abschnitt (45) des Schraubkanals (6) von der Wand (12) des Hohlschafts (2) nach innen hin gerichtete Rippen (25) angeordnet sind, die den Schraubkanal (6) verengen, so dass eine Schraube zum Befestigen im Schraubkanal (6) in die Rippen (25) einschneiden kann.

9. Dübel (1) nach Anspruch 8, **dadurch gekennzeichnet, dass** das hintere Ende (26) mindestens einer der Rippen (25) einen größeren Abstand (27) zum hinteren Ende (3) des Hohlschafts (2) aufweist als der Schlitz (10) und/oder dass sich mindestens eine der Rippen (25) im Wesentlichen über die gesamte Länge des Außengewindes (7) erstreckt, insbesondere über das vordere Ende (19) des Außengewindes (7) hinaus.

10. Dübel (1) nach einem der vorstehenden Ansprüche, **dadurch gekennzeichnet, dass** der Schraubkanal (6) in einem vorderen Abschnitt (29), der vor dem Außengewinde (7) angeordnet ist, einen kleineren Durchmesser aufweist als im Bereich des Außengewindes (7).

11. Dübel (1) nach einem der vorstehenden Ansprüche, **dadurch gekennzeichnet, dass** auf der Außenseite des Hohlschafts (2) vor dem Außengewinde (7) nutartige Vertiefungen (28) angeordnet sind, die Keilflächen (30) mit unterschiedlichen Steigungen bilden, wobei hintereinander angeordnete Keilflächen (30) insbesondere symmetrisch zu einer Axialebene angeordnet sind.
